## Europäisches Patentamt

## European Patent Office

## Office européen des brevets

(19)

(11) Veröffentlichungsnummer: **0 175 721**
**B1**

(12)     **EUROPÄISCHE PATENTSCHRIFT**

(45) Veröffentlichungstag der Patentschrift: **30.01.91**

(21) Anmeldenummer: **85901338.5**

(22) Anmeldetag: **03.04.85**

(86) Internationale Anmeldenummer:
**PCT/CH85/00054**

(87) Internationale Veröffentlichungsnummer:
**WO 85/04594 24.10.85 Gazette 85/23**

(51) Int. Cl.⁵: **B 01 D 15/08, G 01 N 30/94**

(54) **VERFAHREN UND VORRICHTUNG ZUM TRENNEN VON KOMPONENTEN EINES GEMISCHES DURCH SCHICHTCHROMATOGRAFIE.**

(30) Priorität: **05.04.84 CH 1717/84**

(43) Veröffentlichungstag der Anmeldung:
**02.04.86 Patentblatt 86/14**

(45) Bekanntmachung des Hinweises auf die
Patenterteilung:
**30.01.91 Patentblatt 91/05**

(84) Benannte Vertragsstaaten:
**CH DE FR GB LI**

(56) Entgegenhaltungen:
**DE-A-3 226 112**
**GB-A-1 262 493**
**US-A-2 986 280**

**Chromatogr. Rev., Volume 6 1964, Z. DEYL et al.: Centrifugal chromatography", Seiten 19-52**
**Journal of High Resolution Chromatography & Chromatography Communications, Band 8, Nr. 2, Februar 1985, Heidelberg (DE) Sz. Nyiredy et al.: "Sequential Centrifugal Layer Chromatography (SCLC): a New Technique for the Isolation of Natural Compounds. Part 1: Description of the Method and Practical Aspects", Seiten 73-76**

(73) Patentinhaber: **NYIREDY, Szabolcs, Dipl.-Pharm.**
**Clausiusstrasse 25**
**CH-8092 Zürich (CH)**
(73) Patentinhaber: **ERDELMEIER, Clemens, Dipl.-Pharm. ETH**
**Clausiusstrasse 25**
**CH-8092 Zürich (CH)**
(73) Patentinhaber: **STICHER, Otto, Dipl.-Apoth.**
**Clausiusstrasse 25**
**CH-8092 Zürich (CH)**

(72) Erfinder: **NYIREDY, Szabolcs, Dipl.-Pharm.**
**Clausiusstrasse 25**
**CH-8092 Zürich (CH)**
Erfinder: **ERDELMEIER, Clemens, Dipl.-Pharm. ETH**
**Clausiusstrasse 25**
**CH-8092 Zürich (CH)**
Erfinder: **STICHER, Otto, Dipl.-Apoth.**
**Clausiusstrasse 25**
**CH-8092 Zürich (CH)**

(74) Vertreter: **Hunziker, Jean**
**Patentanwaltsbureau Jean Hunziker**
**Schulhausstrasse 12**
**CH-8002 Zürich (CH)**

Courier Press, Leamington Spa, England.

**Beschreibung**

Die Erfindung betrifft ein Verfahren sowie eine Vorrichtung zum Trennen von Komponenten eines Gemischs durch Schichtchromatographie.

Zum Trennen von Komponenten eines Gemischs ist die Verwendung der präparativen zentrifugalen Schichtchromatographie bekannt (Z. Deyl, J. Rosmus und M. Pavlicek, Chromatogr. Rev. 6 (1964) 19. E. Heftmann, J. M. Krochta, D. F. Farkas und S. Schwimmer, J. Chromatogr. 66 (1972) 365). Dieses Verfahren eignet sich zur Trennung von Naturstoffen (K. Hostettmann, M. Hostettmann-Kaldas und O. Sticher, J. Chromatogr. 202 (1980) 154; I.R. Hunter, E. Heftmann, J.Liq.Chromatogr, 6 (1983) 281) und von technischen oder synthetischen Substanzen (S. Sekiya K. Tsuji und M. Yamanaka Yukagaku 28 (1979) 497, S. Chen und J. Wang, Huaxue Tongbao 10 (1982) 591; F. Derguini, V. Balogh-Nair und K. Nakanishi, Tetrahedron Lett. (1979) 4899).

Schwierige Trennungen wie z.B. von Mischungen mit mehreren Isomeren oder von komplexen Naturstoffgemischen, sind bisher in der Literatur noch nicht beschrieben worden. Gewisse Trennprobleme sind nur in mehreren Trennschritten lösbar (C.A.J. Erdelmeier, Ph.D.Thesis, ETH Zürich, Nr. 7294 (1983).

Durch die US-A-4,139,458 ist eine Vorrichtung bekannt, die eine für die Trennungen ausreichende Zentrifugalkraft, sowie eine kontinuierliche Sammlung von getrennten Komponenten, und die Herstellung von Platten mit überall konstanter Schichtdecke ermöglicht. Das Gerät erlaubt darüber hinaus präparative Trennungen im grösseren Massstab (mehrere 100 mg).

Der Nachteil der bisherigen präparativen zentrifugalen Schichtchromatographie-Verfahren und -Vorrichtungen liegt darin, dass die Kapazitä und die Trennleistung selbst hergestellten Dünnschichtplatten vergleichbar und somit im allgemeinen nicht genügend ist.

Im Gegensatz zur vertikalen Schichtchromatographie ermöglicht die horizontale Schichtchromatographie eine praktisch lineare Geschwindigkeit des Eluenten, sie erlaubt aber keine präparative Arbeitsweise ohne Auskratzen von Substanzzonen.

In letzter Zeit wurde eine neue Dünnschichtchromatographie-Technik, die Sequenz-Dünnschichtchromatographie als analytische Methode beschrieben (P. Buncak, GIT, Supplement Chromatographie (1982) 3; U. Klemm, GIT, Supplement Chromatographie (1982) 9). Diese Technik beruht ebenfalls auf einer horizontalen Entwicklung, d.h. sie arbeitet mit praktisch linearer Geschwindigkeit des Eluenten.

Bei der Sequenz-Dünnschichtchromatographie wird das Fliessmittel auf einer Linie zugeführt und die Zufuhr ist örtlich und zeitlich parallel variierbar. Das Fliessmittel wird ausschliesslich mit Hilfe der Kapillaraktivität gefördert. Man kann somit Abschnitte eines Gesamtchromatogramms in ihrer Trennung verbessern, indem für diese Teilprobleme die optimale Fliessmittel-Zusammensetzung gewählt wird. Auch dieses Verfahren ist jedoch für präparative Zwecke nicht ohne Auskratzen und Elution von Substanzzonen verwendbar.

Durch die US-A-2,986,280 ist eine chromatographische Trennvorrichtung bekannt. Diese weist in einem Gehäuse mit einer vergleichsweise kleinen Oeffnung im Deckel einen Rotor auf, der mit einem Adsorbens beschichtet ist. Eine Lösungsmittelaufgabe-Einrichtung trägt einen Injektor in der Weise, dass dieser mit seinem Ende durch die Oeffnung im Deckel in das Gehäuse ragt und einen Eluenten auf die Adsorbensschicht auf dem Rotor auftragen kann. Die Trennung erfolgt mit dieser bekannten Einrichtung in der Weise, dass mittels dem Injektor ein Eluent auf den radial inneren Bereich des Adsorbens aufgetragen wird. Der Eluent wandert radial nach aussen bis er an zu trennende Gemische stösst, die auf das Adsorbens aufgebracht sind und führt dann eine radial gegen den Rotorrand gerichtete Migration dieser Gemische herbei. Diese bekannte Trennvorrichtung weist nur einen Injektor für die Lösungsmittelaufgabe vor, mittels welchem das Lösungsmittel an eine festgelegte Stelle im zentrumnahen Bereich der chromatographischen Schicht aufbringbar ist. Der Injektor und damit die Aufgabestelle des Lösungsmittels ist nicht variabel. Die mit dieser bekannten Vorrichtung durchführbaren Trennverfahren sind stark begrenzt. Eine qualitativ hochstehende Trennung, insbesondere von chromatographisch schwer trennbaren Substanzen ist damit nicht oder nur mit sehr hohem Aufwand möglich.

Der Erfindung liegt die Aufgabe zugrunde ein Verfahren zur Trennung von Komponenten eines Gemisches mittels Chromatographie sowie eine Vorrichtung hierfür zu schaffen, welche die Vorteile der bekannten präparativen zentrifugalen Schichtchromatographie, der analytischen Horizontal-, Antizirkular- und der Sequenzdünnschichtchromatographie vereinigen, deren Nachteile vermeiden, die Kapazität und Trennleistung gegenüber den bisher bekannten Verfahren und Geräte der präparativen zentrifugalen Schichtchromatographie noch wesentlich steigern und eine wesentlich bessere Trennung von Naturstoffen oder synthetischen Produkten bei vergleichsweise geringerem Zeitaufwand auch bei der Trennung und Elution komplexer Substanzgemische ermöglichen.

Diese Aufgabe wird durch ein Verfahren gemäss Anspruch 1 und mit einer Vorrichtung nach Anspruch 5 gelöst.

Mit den erfindungsgemässen Massnahmen kann das Lösungsmittel an jeder beliebigen Stelle und in einem beliebigen Zeitpunkt aufgebracht werden. Die Trennung kann in einer Kombination der zirkularen und der antizirkularen Chromatographie erfolgen, während mit den bisher bekannten Methoden nur entweder linear, zirkular oder antizirkular chromatographiert werden kann.

Es ergibt sich daraus eine neue Sequenztechnik, welche die Kombination von Zentrifugal- und Kapillarkraft unter Verwendung passender Lösungsmittel ausnützt und die präparativen zentrifugalen schichtchromaographischen Methoden erweitert, indem die Eluentaufgabe, vom Trennproblem abhängig, örtlich und zeitlich variabel eingesetzt werden kann. Das Fliessmitel kann punkt- oder ringförmig aufgetragen werden, wird in der Schicht jedoch immer ringförmig gefördert. Auch schwierige Trennungen werden auf einer einzigen Schicht möglich. Für chromatographisch schwer trennbare Substanzen lässt sich trotz des vergleichsweise geringen Durchmessers des Rotors durch die Kombination von zirkularer und antizirkularer Technik eine grosse Trennstrecke erreichen. Nach chromatographischen Grundtrennungen gebildete äussere Substanzmischzonen lassen sich mit einem spezifischeren, selektiven Fliessmittel auftrennen, so dass Zonen, die innerhalb der Fliessmittelaufgabe liegen, stationär bleiben. Der Zeitaufwand zur Trennung und Eluion komplexer Substanzgemische wird vergleichsweise kleiner. Bereits sauber abgetrennte Komponenten lassen sich mit einem starken Eluent schnell und konzentriert eluieren.

In der vorgenannten US-A-2,986,280 ist auch nicht andeutungsweise vorgesehen, das Lösungsmittel zeitlich und örtlich beliebig auf das Adsorbens aufzutragen, geschweige denn im Anschluss an das Aufgeben eines ersten Eluents ein zweiter oder gar ein driter Eluent wiederum an beliebiger, zweckmässig erscheinender, von der Aufgabestelle der vorhergehenden unterschiedlichen Aufgabestelle aufzubringen. Solche Massnahmen sind bei dieser bekannten Vorrichtung wegen der geringen Grösse der Deckelöffnung des Gehäuses schon konstruktiv unmöglich. Die Möglichkeit einen bzw. mehrere Eluente an beliebig auswählbaren Stellen zwischen dem Zentrum und dem Rand des Rotors auf das darauf befindliche Adsorbens aufzubringen stell ein wichiges und essentielles Merkmal für die Lösung der Erfindungsaufgabe dar.

Die Erfindung wird im folgenden beispielsweise näher erläutert, wobei Bezug auf die Zeichnung genommen wird.

Fig. 1 ist ein Vertikalschnitt durch eine erste Ausführungsform einer erfindungsgemässen Vorrichtung mit welcher das erfindungsgemässe Verfahren durchführbar ist.

Fig. 2 ist ein Teilschnitt der Vorrichtung nach Fig. 1 und veranschaulicht wegnehmbare konische Lösungsmittelaufgabeorgane, welche in dieser Vorrichtung eingesetzt werden können.

Fig. 3a zeigt in einer Teilschnittdarstellung eine Variante der Ausführungsform der Fig. 1.

Fig. 3b ist ein Schnitt nach der Linie A-A der Fig. 3a.

Fig. 4a zeigt in einer Teilschnittdarstellung eine weitere Variante der Ausführungsform nach Fig. 1.

Fig. 4b ist eine Teilansicht zur Fig. 4a in Richtung des Pfeils 4b in Fig. 4a.

Fig. 5a zeigt in einer Teilschnittdarstellung eine weitere Variante der Vorrichtung nach Fig. 1.

Fig. 5b ist ein Schnitt nach der Linie B-B in Fig. 5a, und die

Fig. 6a-6d zeigen schematisch aufeinanderfolgende Schritte der Trennung von Komponenten aus einem Gemisch bei Anwendung des erfindungsgemässen Verfahrens.

Für das erfindungsgemässe Verfahren wird im folgenden die Kurzbezeichnung "sequenzzentrifugale Schichtchromatographie" verwendet. Darunter ist somit das Verfahren zu verstehen, bei welchem die Lösungsmittelzufuhr örtlich und zeitlich variiert werden kann, sodass die mobile Phase an jeder beliebigen Stelle auf die chromatographische Schicht aufgebracht werden kann.

Weiter sollen im folgenden mit der Bezeichnung "sequenzzentrifugale schichtchromatographische Eluent- oder Lösungsmittelaufgabe-Einrichtungen" Vorrichtungen bezeichnet werden, mit welchen die örtlich und zeitlich variierbare Lösungsmitelzufuhr im Sinne des erfindungsgemässen Verfahrens erfolgen kann.

Wie später noch näher erläutert wird, stehen beim erfindungsgemässen Verfahren nach einer ersten chromatographischen Grundtrennung verschiedene Möglichkeiten der Fortsetzung des Trennverfahrens offen.

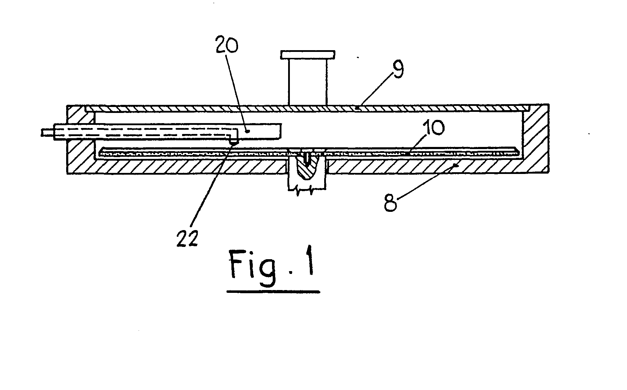

Grundsätzlich ist die sequenzzentrifugale Schichtchromatographie mit vier unterschiedlichen technischen Einrichtungen durchführbar. Drei davon, im folgenden allgemein als Einrichtungen I bezeichnet, arbeiten mit einem rotierenden Rotor, wobei die Lösungsmittelzufuhr-Einrichtung entweder innerhalb der Kammer oder ausserhalb derselben über dem Gehäusedeckel befestigt ist. Die Fig. 1 veranschaulicht eine solche Einrichtung I, wobei die Lösungsmittelzufuhr-Einrichtung mit 20 und der Injektor mit 22 bezeichnet ist.

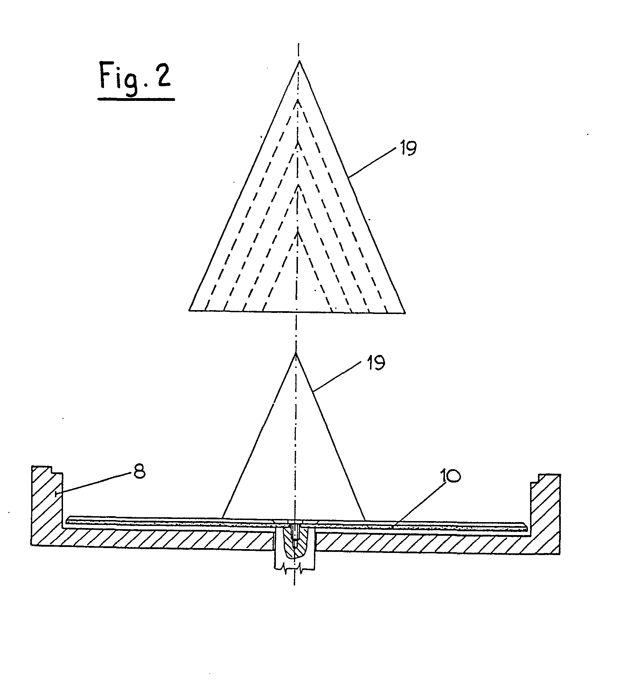

Die vierte Einrichtung, im folgenden allgemein als Einrichtung II bezeichnet, weist eine kreisförmige Lösungsmittelaufgabe-Einrichtung auf, die bei stillstehendem Rotor auf demselben plaziert wird. Eine Einrichtung dieser Gattung veranschaulicht Fig. 2. Die Lösungsmittelaufgabe-Einrichtung ist in diesem Beispiel mit 19 bezeichnet.

Im übrigen ist in den Fig. 1-5 jeweils mit 8 die chromatographische Kammer, mit 9 deren Deckel, vorzugsweise aus Glas, mit Halter und mit 10 die chromatographische Platte bezeichnet.

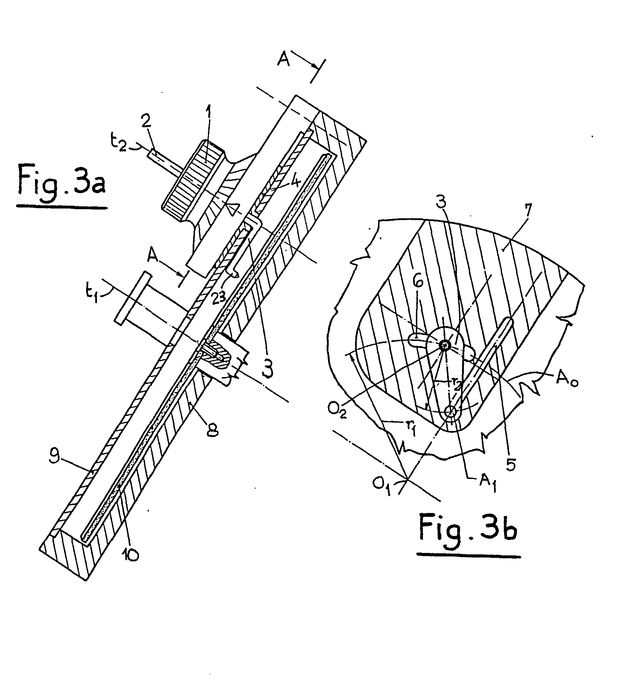

Die Fig. 3a und 3b veranschaulichen einen Analog-Betriebsort-Wähler mit einem Gelenkarmmechanismus.

Die Wahl des Betriebsorts, d.h. des Orts zwischen Zentrum und Aussenrand der chromatographischen Platte 10, an welchen das Lösungsmittel aufgegeben werden soll, erfolgt mit einem Einstellknopf 1, wobei eine Skala das Wiederfinden einer bestimmten Lage ermöglicht.

Die Lösungsmittelaufgabe erfolgt durch ein Glasrohr 2 mit der Achse $t_2$ und einem Gelenkarm 3. Bei der Wahl des Betriebsores bewegt sich die Achse 2 der Lösungsmittelaufgabe-Einrichtung $0_1$ auf einer Bahn des Radius $r_1$ in einer Schleife $A_0$ während sich die Achse des Injektors 23 um den Punkt $0_2$ auf einer Bahn des momentanen Radius $r_2$ in einer Schleife $A_1$ bewegt. Der Bewegungsspielraum des Gelenkarms 3 ist in Fig. 3 mit 5 und 6 bezeichnet. Ein mit 7 bezeichneter Untersatz ist so fixiert, dass sich eine geradlinige Bewegung des Injektors mit dem Achsenpunkt $A_1$ ergibt, während sich der Einstellknopf 1 auf einem Radius $r_1$ um $0_1$ und um den eigenen Mitelpunkt $0_2$ bewegt. In der Fig. 3 bezeichnet 4 die Dichtung des Gelenkarms.

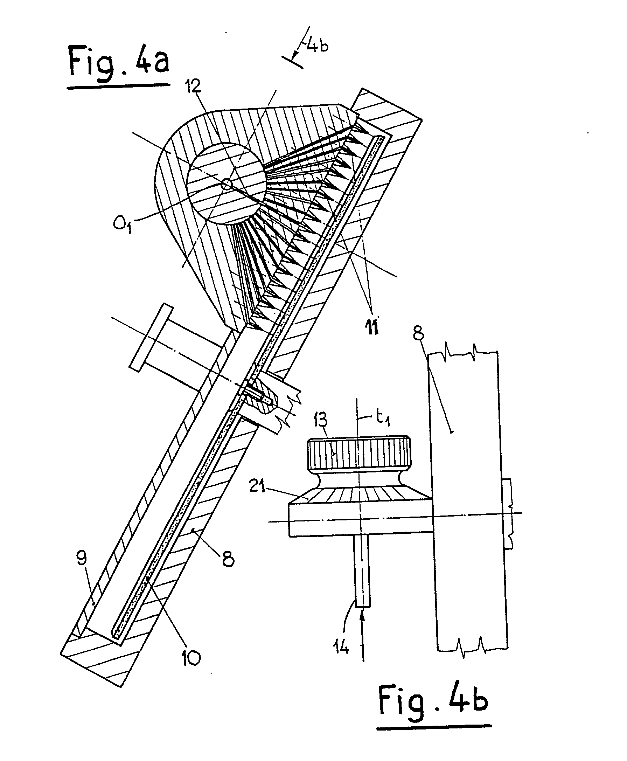

Die Fig. 4a und 4b veranschaulichen einen Diskret-Betriebsortwähler. Die Lösungsmittelaufgabe-Einrichtung weist eine Mehrzahl Injektoren 11 in einer mit der Zahl der Lösungsmittelaufgabe-Einrichtungsplätze übereinstimmenden Zahl auf. Jeder Injektor 11 weist einen Kanal bis zur Peripherie eines Betriebsortwählers in Form eines Betriebsortwählzylinders 12 auf. Eine einzige radiale Bohrung, im Zylinder 12 stellt, abhängig von der Stellung des Einstellknopfs 13 mit welchem der Betriebsort gewählt wird, die Verbindung des gewählten Injektors 11 mit einem Glasrohr 14 her, durch welches Lösungsmittel zugeführt werden kann. Die Achse $t_1$ des Glasrohrs 14 stimmt mit der Achse des Einstellknopfs 13 mit angebrachter Skala 21 überein.

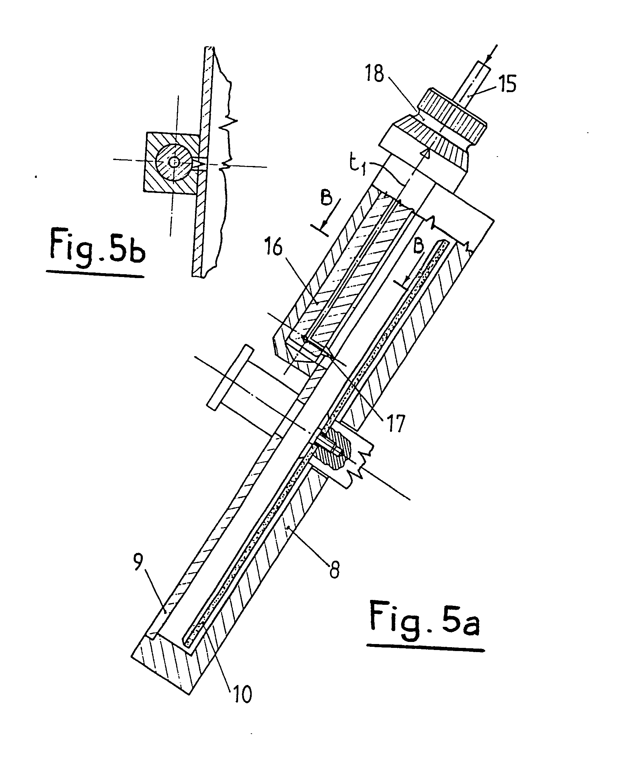

Eine dritte Ausführungsform einer Lösungsmittelaufgabe-Einrichung I zeigen die Fig. 5a und 5b. Bei dieser ist das Lösungsmittelaufgaberohr 15 mit der Achse $t_1$ in einen mit einem äusseren Gewinde versehenen Kolben 16 eingepasst.

Die momentane Position des Betriebsortes des Injektors 17 hängt von der Position des Einstellknopfes mit Skala 18 ab. Die Einstellung ist kontinuierlich.

Mit den vorstehend mit Bezug auf die Fig. 3a, 3b bzw. 4a, 4b bzw. 5a, 5b beschriebenen Einrichtungen I kann durch Verwendung von zwei oder mehr Lösungsmittelaufgabe-Einrichtungen, Lösungsmittel an zwei oder mehr Stellen gleichzeitig aufgegeben werden.

Mit den in Fig. 2 dargestellten Einrichtungen II erfolgt die Lösungsmittelaufgabe in Kreisform.

Die Wahl verschiedener Lösungsmittelaufgabe-Orte ergibt sich durch die Verwendung von Ringformen mit unterschiedlichem Radius. Bei der dargestellten Ringformserie 19 weist das kleinste Element einen Radius auf, der den Radius der Platte 10 beim Schichtanfang übersteigt. Das grösste Element der Ringformserie 19 weist einen Radius auf, der kleiner ist als der Radius der Platte 10 beim Schichtende. Diese Ringformserie 19 kann, z.B., wie im oberen Teil der Fig. 2 gezeigt, aus fünf übereinandergeschobenen Kegelmänteln bestehen. Die Höhe der Kegel beeinflusst die Lösungsmittelaufgabe-Geschwindigkeit und muss daher abhängig von der Viskosität des verwendeten Lösungsmittels gewählt werden. Die Kegel müssen aus einem inerten Material bestehen, damit eine gleichmässige Lösungsmittelgeschwindigkeit gewährleistet ist, z.B. Chromatographie-Papier.

Bei der sequentiellen zentrifugalen Schichtchromatographie gemäss dem erfindungsgemässen Verfahren und mit den beschriebenen Vorrichtungen wird ein zu trennendes Substanzgemisch zuerst in der Nähe des Schichtmittelpunkts aufgetragen. Eine erste chromatographische Grundtrennung kann dazu führen, dass

a) eine oder mehrere äussere rein abgetrennte Substanzzonen und eine oder mehrere innere Gemischzonen entstehen, oder

b) eine oder mehrere äussere Gemischzonen und eine oder mehrere innere Substanzzonen entstehen.

Im Fall a) wird die Lösungsmittelzufuhr nach der Grundtrennung gestoppt. Bei Verwendung einer Einrichtung I wird die Lösungsmittelaufgabe so eingestellt, dass die eine oder die mehreren abgetrennten Substanzzonen von aussen nach innen nacheinander mit einem starken Elutionsmittel (z.B. Methanol etc.) zentrifugal beschleunigt eluiert werden. Zur Aufarbeitung der einen oder mehreren inneren Gemischzonen wird die Lösungsmittelzufuhr wieder gestoppt. Danach wird die rotierende, nasse Schicht mit einem inerten Gas (z.B. Stickstoff etc.) von entsprechender Temperatur, getrocknet. Nach Trocknung der Schicht wird die Rotation gestoppt. Dann wird, z.B. mit der Ringformserie 19, eine kreisförmige Lösungsmittelaufgabe auf die Schicht gesetzt und die verbliebene(n) Zone(n) mit einem starken Elutionsmittel (z.B. Methanol etc.) mit Hilfe der Kapillarkraft in Richtung des Mittelpunkts bis zum Schichtanfang zurückgestossen, sodass die verbliebene(n) Zone(n) konzentriert wird (werden) und somit zu einer für den nachfolgenden Trennprozess besseren Auflösung führt. Daneben besteht auch die Möglichkeit, mit einem spezifischen Eluent die verbliebene(n) Zone(n) in Richtung des Mittelpunkts mit Hilfe der Kapillarkraft weiterzuentwickeln.

Die Lösungsmittelzufuhr wird schliesslich gestoppt, die kreisförmige Lösungsmittelaufgabe-Einrichtung 19 entfernt und die Schicht bei stehendem Rotor in der vorher beschriebenen Weise getrocknet. Hierauf wird die verbliebene konzentrierte oder mit Hilfe der Kapillarkraft antizirkular entwickelte Zone mit einem spezifischen Fliessmittel bei wieder laufendem Rotor weiter aufgetrennt. Dabei geschieht die Lösungsmittelaufgabe erneut am Anfang der Schicht. In der Folge kann das vorstehend beschriebene Vorgehen so oft wiederholt werden, bis die Gesamttrennung befriedigend gelöst ist.

Im Fall b) wird (werden) die eine oder die mehreren äussere(n) Gemischzone(n) nach Abstellen der Lösungsmittelzufuhr und entsprechender Einstellung der Lösungsmittelaufgabe-Einrichtung mit spezifischen Fliessmitteln bei der äussersten Zone beginnend nacheinander getrennt. Für die Behandlung der verbliebenen einen oder der mehreren inneren Gemischzone(n) ist das analoge, vorher beschriebene Vorgehen zu wählen. Wenn der Trennweg zu kurz ist, kann (können) die eine oder die mehreren Gemischzone(n) wieder auf die Innenseite der Chromatographie-Platte 10 zurückgeleitet und einer nächsten Entwicklung mit einem passenden Lösungsmittel unterzogen werden.

Verzichtet man auf eine Einrichtung II mit kreisförmiger Lösungsmittelaufgabe, besteht die Möglichkeit mit einer Einrichtung I bei niedriger Rotationsgeschwindigkeit antizirkular zu arbeiten. Dadurch können entweder die nicht getrennten Substanzen in Richtung der Auftragungszone zurückgestossen oder die Substanzen in dieser Richtung mit einem geeigneten Lösungsmittel weiter aufgetrennt werden.

Anwendungsbeispiel der sequenzzentrifugalchromatographischen Schichtchromatographie

Eine Mischung von fünf Furanocumarinen, 2H,5-Methoxy-Furo [2,3-h][1]benzopyran-2-on (Iso-Bergapten), 2H,5,6-Dimethoxy-Furo[2,3-h][1]benzopyran-2-on (Pimpinellin), 7H,4-Methoxy-Furo[3,2-g][1]benzopyran-7-on (Bergapten), 7H,4,9-Dimethoxy-Furo[3,2-g][1]benzopyran-7-on (Iso-Pimpinellin) und 2H-6-Methoxy-Furo[2,3-h][1]benzopyran-2-on (Sphondin) in einer Gesamtmenge von 50 mg wurde in 0,5 ml Chloroform gelöst und an der Innenseite der Chromatographie-Platte, die mit Kieselgel PF 254 (Merck) beschichtet war, aufgetragen. Der Schichtradius betrug 10 cm, die Rotorgeschwindigkeit war konstant: 750 U/min.

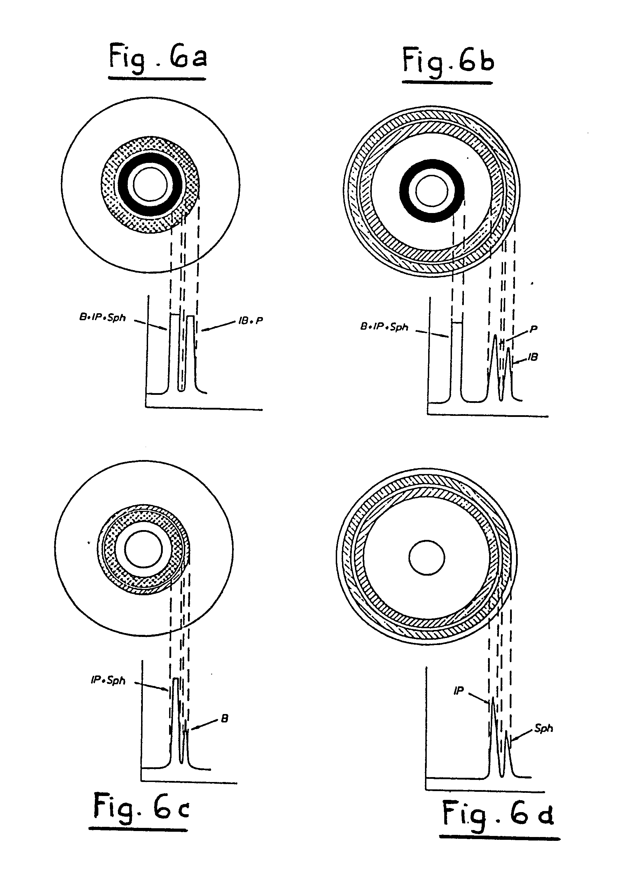

Die Fig. 6a bis 6d zeigen die Trennung der fünf Furanocumarine mit der sequenzzentrifugalchromatographischen Schichtchromatographie in vier Schritten. Für jeden Teilschritt sind in der betreffenden Figur oben die Trennung auf der Platte dargestellt und unten das ensprechende hypothetische Densitogramm, wobei B = Bergapten, IP = Isopimpinellin, Sph = Sphondin, IB = Isobergapten, P Pimpinellin darstellen.

Nach der Trocknung wurden in einer ersten Grundtrennung mit n-Hexan-Tetrahydrofuran (70:30) als Laufmittel Iso-Bergapten und Pimpinellin (Zone 1) von Bergapten, Iso-Pimpinellin und Sphondin (Zone 2) abgetrennt (Fig. 6a). Die Trennung wurde gestoppt, das Adsorbens getrocknet und mit der schwenkbaren Lösungsmittelaufgabe-Einrichtung die mobile Phase n-Hexan-Chloroform-Tetrahydofuran (64:16:1) zwischen beide Zonen 1 und 2 aufgegeben. Es wurde bis zur vollständigen Trennung von Iso-Bergapten und Pimpinellin chromatographiert (Fig. 6b). Dann wurde die Lösungsmittelzufuhr gestoppt, die Schicht getrocknet und die beiden Substanzen mit Hilfe des Schwenkarms mit Methanol nacheinander schnell und in kleinen Volumina aus der Schicht eluiert. Die Substanzen der inneren Zone bleiben während dieses Vorganges stationär. Nach erneuter Trocknung der Platte wurde, wieder in der Nähe des Mittelpunkts beginnend, mit n-Hexan-Chloroform-Tetrahydrofuran (64:16:1) als Lösungsmittel chromatographiert, bis Bergapten deutlich von Iso-Pimpinellin und Sphondin getrennt als eine Zone zu erkennen war (Fig. 6c). Der Laufmittelfluss wurde wiederum gestoppt und die Bergaptenzone nach Zwischentrocknung mit Methanol schnell und in einem kleinen Volumen eluiert.

Es wurde in der Folge wiederum getrocknet. Die verbliebenen Substanzen trennte man mit Methylenchlorid 100%, wobei die Lösungsmittelaufgabe wieder in der Nähe des Mittelpunktes stattfand.

Um einen für die Trennung der noch verbliebenen Stubstanzen ausreichend grossen Trennweg zu haben, wurde die Rotation gestoppt, ein passender Kegel aus speziellem Filterpapier aufgesetzt und die Zone mit Methanol in Richtung des Mittelpunktes bis zur Nähe des Schichtanfangs zurückgestossen. Nach Zwischentrocknung wurden Iso-Pimpinellin und Sphondin schliesslich mit Methylenchlorid 100% bis zur deutlichen Zonentrennung separiert (Fig. 6d). Nach Zwischentrocknung wurden beide Substanzen unter Verwendung von Methanol nacheinander schnell und in kleinen Volumina aus der Schicht herausgewaschen.

**Patentansprüche**

1. Verfahren zur Trennung von Komponenten eines Gemisches durch Schichtchromatographie, bei welchem

a) ein zu trennendes Substanzgemisch auf den zentralen Teil eines mit Adsorbens beschichteten drehbaren Rotors aufgetragen wird;

b) eine Trennung des Gemisches herbeigeführt wird, indem der Rotor in Drehung versezt wird und durch mindestens eine zwischen dem Zentrum und dem Rand des Rotors beliebig bewegliche Lösungsmittelaufgabe-Einrichtung auf den rotierenden Rotor ein erster Eluent aufgebracht wird, der eine unterschiedliche radiale Migration der Komponenten des Gemisches durch das auf dem Rotor befindliche Adsorbens unter der Wirkung der Zentrifugalkraft bewirkt;

$c_1$) hierauf die Migration durch Unterbrechung der Lösungsmittelaufgabe gestoppt, die Adsorbensschicht getrocknet und die Trennung bei stehendem Rotor in der Weise fortgesetzt wird dass mit einem an einer, beliebigen Stelle in Kreisringform aufgetragenen zweiten Eluent die sich im Adsorbens befindenden Gemischkomponenten, vom Ort der Aufgabe des zweiten Eluents abhängig, durch Kapillaraktivität in Richtung des Rotorzentrums und/oder des Rotorrandes bewegt werden; oder

$c_2$) die Migration durch Unterbrechung der Lösungsmittelaufgabe gestoppt, die Adsorbensschicht getrocknet, die Rotationsgeschwindigkeit des Rotors herabgesetzt und die Trennung bei verminderter Rotorgeschwindigkeit in der Weise fortgesetzt wird, dass mit einem an einer beliebigen Stelle in Kreisringform aufgetragenen zweiten Eluent die sich im Adsorbens befindenden Gemischkomponenten vom Ort der Aufgabe des zweiten Eluents abhängig, durch Zusammenwirken von Kapillaraktivität und Zentrifugalkraft in Richtung des Rotorzentrums und/oder des Rotorrandes bewegt werden;

d) nach Unterbrechung der Lösungsmittelaufgabe das Adsorbens erneut getrocknet wird;

e) die Trennung danach auf dem rotierenden bzw. wieder drehenden Rotor in der Weise fortgesetzt wird, dass mittels der Lösungsmittelaufgabe-Einrichtung ein dritter Eluent in Kreisringform aufgetragen wird, welcher eine Migration mindestens einer der Gemischkomponenten radial auswärts durch das auf dem Rotor befindliche Adsorbens bewirkt, und

f) die aus dem rotierenden Rotor ausgestossenen Komponenten gesammelt und abgeleitet werden.

2. Verfahren nach Anspruch 1 oder 2, dadurch gekennzeichnet, dass die Verfahrensschritte d) und e) einmal oder mehrmals wiederholt werden.

3. Verfahren nach Anspruch 1 oder 2, dadurch gekennzeichnet, dass als erster, zweiter und dritter Eluent unterschiedliche Eluente eingesetzt werden.

4. Verfahren nach Anspruch 1 oder 2, dadurch gekennzeichnet, dass mindestens zwei der genannten ersten, zweiten und dritten Eluente unter sich identisch sind.

5. Vorrichtung zum Trennen von Komponenten eines Gemisches durch Schichtchromatographie, mit einem drehbar gelagerten, mit Adsorbens beschichteten Rotor.

mit einer ersten Einrichtung zur Aufgabe eines Eluents auf das Absorbens an einer gewählten Stelle, wobei diese Einrichtung entweder einen in radialer Richtung zwischen dem Zentrum und dem Rand des Rotors (10) beweglich und einstellbar angeordneten Injektor (22, 23, 17) oder mehrere zwischen dem Zentrum und dem Rand (10) des Rotors (10) angeordnete Injektoren 11 trägt, von denen jeweils einer wählbar ist um ein aufzugebendes Eluent auf das Adsorbens an der genannten gewählten Stelle aufzubringen und

mit einer zweiten Einrichtung zur Aufgabe eines zweiten Eluents auf alle längs eines kreisförmigen, zur Drehachse des Rotors konzentrischen Bereichs des Adsorbens liegenden Punkte der Adsorbensschicht, wobei der Radius dieses Kreisbereichs wählbar ist.

**Revendications**

1. Procédé de séparation de composants d'un mélange par chromatographie sur plaque, dans lequel:

a) un mélange de substances à séparer est déposé sur la partie centrale d'un rotor tournant recouvert d'adsorbant;

b) une séparation du mélange est provoquée en faisant tourner le rotor et un premier éluant est déposé sur le rotor en rotation au moyen d'au moins un dispositif d'introduction de solvant, mobile à volonté entre le centre et le bord du rotor, cet éluant provoquant une migration radiale différentielle des composants du mélange à travers l'adsorbant déposé sur le rotor, sous l'effet de la force centrifuge;

$c_1$) après quoi la migration est arrêtée en interrompant l'apport de solvant, la couche d'adsorbant est séchée, et la séparation est continuée, le rotor étant arrêté, de telle manière qu'avec un deuxième éluant déposé en un endroit choisi à volonté, sous la forme d'un anneau circulaire, les composants du mélange se trouvant dans l'adsorbant sont déplacés, en fonction de l'endroit d'introduction du deuxième éluant, par activité capillaire en direction du centre du rotor et/ou du bord du rotor; ou bien:

$c_2$) la migration est arrêtée en interrompant l'apport de solvant, la couche d'adsorbant est séchée, la rotation du rotor est ralentie, et la séparation est poursuivie avec le rotor tournant à vitesse réduite, de telle manière qu'avec un deuxième éluant déposé en un endroit choisi à volonté, sous la forme d'un anneau circulaire, les composants du mélange se trouvant dans l'adsorbant sont déplacés, en fonction de l'endroit d'introduction du deuxième éluant, sous l'effet combiné de l'activité capillaire et de la force centrifuge, en direction du centre du rotor et/ou du bord du rotor;

d) après interruption de l'apport du solvant, l'adsorbant est séché à nouveau;

e) la séparation est ensuite poursuivie sur le rotor en rotation ou remis en rotation, de telle manière qu'un troisième éluant est introduit au moyen du dispositif d'introduction du solvant, cet éluant provoquant une migration radiale d'au moins un des composants du mélange vers l'extérieur, à travers l'adsorbant se trouvant sur le rotor, et

f) les composants expulsés hors du rotor en rotation sont recueillis et évacués.

2. Procédé selon la revendication 1, caractérisé en ce que les opérations d) et e) du procédé sont répétées une fois ou plusieurs fois.

3. Procédé selon la revendication 1 ou 2, caractérisé en ce qu'on utilise des éluants différents en tant que premier, deuxième et troisième éluant.

4. Procédé selon la revendication 1 ou 2, caractérisé en ce qu'au moins deux des éluants précités, le premier, le deuxième et le troisième, sont identiques entre eux.

5. Appareil de séparation de constituants d'un mélange par chromatographie sur plaque, avec un rotor monté de façon rotative, recouvert d'adsorbant;

avec un premier dispositif pour l'introduction d'un éluant sur l'adsorbant en un endroit choisi, ce dispositif portant un ou plusieurs injecteurs (22, 23, 17) disposés de manière mobile et réglable en sens radial entre le centre et le bord du rotor (10), un de ces injecteurs pouvant toujours être choisi pour déposer un éluant sur l'adsorbant à l'endroit choisi précité, et

avec un deuxième dispositif pour l'introduction d'un deuxième éluant sur tous les points de la couche d'adsorbant se trouvant le long d'une région circulaire de cette couche concentrique à l'axe de rotation du rotor, le rayon de cette région circulaire pouvant être choisi.

**Claims**

1. Method for the separation of components of a mixture by thin-layer chromatography, wherein

a) a substance mixture to be separated is applied onto the central part of a turnable rotor which is coated with an adsorbent;

b) a separation of the mixture is achieved in that the rotor is put into rotation, and a first eluent is applied onto the rotating rotor by at least one solvent-application device which is freely displaceable between the centre and the edge of the rotor, which eluent causes a varied radial migration of the components of the mixture through the adsorbent on the rotor due to centrifugal force;

$c_1$) then the migration is stopped by way of interrupting the solvent application, the adsorbent layer is dried, and the separation is continued whilst the rotor is stationary in such a way that, by means of a second eluent, applied in any location in a circular form, the mixture components located in the adsorbent are moved, in dependence on the location of the application of the second eluent, by way of capillary action in the direction of the rotor centre and/or the rotor edge; or

$c_2$) the migration is stopped by way of interrupting the solvent application, the adsorbent layer is dried, the rotational speed of the rotor is reduced, and the separation is continued at reduced rotor speed in that, by means of a second eluent, applied in any location in a circular form, the mixture components located in the adsorbent are moved, in dependence on the location of the application of the second eluent, by co-action of capillary action and centrifugal force in the direction of the rotor centre and/or the rotor edge;

d) after the interruption in the solvent application, the adsorbent is dried again;

e) the separation is then continued on the rotating or again turning rotor in such a manner that a third eluent is applied in circular form by way of the solvent-application device, which eluent causes a migration of at least one of the mixture components radially outward through the adsorbent placed on the rotor; and

f) the components ejected from the rotating rotor are collected and removed.

2. Method according to claim 1 or 2, characterised in that the procedural stages d) and e) can be repeated once or repeatedly.

3. Method according to claim 1 or 2, characterised in that different eluents are used as first, second and third eluent.

4. Method according to claim 1 or 2, characterised in that at least two of the mentioned first, second and third eluents are identical with each other.

5. Apparatus for the separation of components of a mixture by thin-layer chromatography,

with a rotatably mounted rotor, coated with adsorbent;

with a first device for the a application of an eluent onto the adsorbent at a selected location, wherein said device is fitted with either an injector (22, 23, 17) which is displaceable in the radial direction between the centre and the edge of the rotor (10) and adjustable, or with several injectors (11) which are placed between the centre and the edge of the rotor (10), of which each one is selectable for the application of an applicable eluent onto the adsorbent at the named selected location; and

with a second device for the application of a second eluent onto an adsorbent layer at all points along a circular area which is concentric to the rotational axis of the rotor, whereby the radius of the circular area is selectable.

Fig. 1

Fig. 2

Fig.3a

Fig.3b

Fig.4a

Fig.4b

4b

12

O₁

11

$t_1$

13

21

9

8

8

8

14

10

Fig.5b

Fig.5a

Fig. 6a

Fig. 6b

Fig. 6c

Fig. 6d